# EUROPEAN PATENT APPLICATION

(11) **EP 4 216 139 A1**
(43) Date of publication of application: **26.07.2023**
(21) Application number: 20954115.0
(22) Date of filing: 17.09.2020
(51) Int. Cl.: G06Q 30/06, A24F 40/65

(54) **INHALATION DEVICE, CONTROL METHOD, AND PROGRAM**

(71) Applicant: Japan Tobacco Inc., Tokyo 105-6927 (JP)
(72) Inventor: YAMADA, Manabu, Tokyo 130-8603 (JP)
(74) Representative: Hoffmann Eitle
(86) International application number: PCT/JP2020/035240
(87) International publication number: WO 2022/059129

(57) **Abstract**

[Problem] To provide a new mechanism for communication performed by an inhalation device which has a communication function and to which accessories can be attached.

[Solution] An inhalation device that uses a base material to generate aerosols that are inhaled by a user, said inhalation device being provided with a first communication unit which performs wireless communication and a control unit which controls the first communication unit, wherein the control unit switches the control of the first communication unit when it is detected that an accessory that is detachably attached to the inhalation device has been attached to the inhalation device.

## Description

### Technical Field

The present invention relates to inhaler devices, control methods, and programs.

### Background Art

Inhaler devices including electronic cigarettes and nebulizers that generate material to be inhaled by users are becoming widely popular. For example, an inhaler device uses a substrate, which includes an aerosol source for generating an aerosol and a flavor source for adding a flavor component to the generated aerosol, to generate a flavor-component-added aerosol. A user can taste the flavor by inhaling the flavor-component-added aerosol generated by the inhaler device.

In recent years, there have been studies for providing various types of inhaler-device-related services by wirelessly exchanging inhaler-device-related information. For example, Patent Literature 1 indicated below discloses technology in which a terminal at a store that sells substrates wirelessly receives identification information about a desired substrate for purchase from a user terminal, such as a smartphone, and identifies the location of the desired substrate for purchase on a store shelf based on the received identification information.

Patent Literature 2 indicated below discloses technology involving attaching an accessory equipped with a communication function to an inhaler device not having a communication function and performing communication between the inhaler device and another device via the accessory.

### Citation List

### Patent Literature

Patent Literature 1: Japanese Patent No. 6691138
Patent Literature 2: PCT International Publication No. WO 2016/156609

### Summary of Invention

### Technical Problem

The technology described in Patent Literature 2 indicated above is targeted to an inhaler device not having a communication function. On the other hand, it is studied in Patent Literature 1 indicated above that the inhaler device itself has a communication function. Accordingly, there is room for technical improvement in the communication technology of inhaler devices.

The present invention has been made in view of the problems mentioned above, and an object of the present invention is to provide a new mechanism for communication performed by an inhaler device that has a communication function and to which an accessory is attachable.

### Solution to Problem

In order to solve the aforementioned problems, an aspect of the present invention provides an inhaler device that uses a substrate to generate an aerosol to be inhaled by a user. The inhaler device includes a first communicator that performs wireless communication and a controller that controls the first communicator. The controller switches control of the first communicator when an accessory to be detachably attached to the inhaler device is detected as being attached to the inhaler device.

The accessory may include a second communicator that performs wireless communication.

The controller may control the first communicator such that the first communicator transmits information different from information transmitted by the second communicator.

The controller may control the first communicator such that the first communicator communicates with a communication counterpart different from a communication counterpart of the second communicator.

The controller may control the second communicator.

The controller may control the second communicator such that the second communicator transmits information different from information transmitted by the first communicator.

The controller may control the second communicator such that the second communicator communicates with a communication counterpart different from a communication counterpart of the first communicator.

Information to be transmitted by the first communicator or the second communicator may include identification information about the substrate.

Information to be transmitted by the first communicator or the second communicator may at least include either identification information about the inhaler device or identification information about the user using the inhaler device.

Information to be transmitted by the first communicator or the second communicator may include profile information indicating a profile that defines operation involving the inhaler device heating the substrate for generating the aerosol.

The wireless communication by the first communicator and the wireless communication by the second communicator may be short-range wireless communication.

A communication method used by the first communicator and a communication method used by the second communicator may be different from each other.

The first communicator may use Bluetooth as a communication method, and the second communicator may use NFC as a communication method.

The inhaler device may further include a third communicator that performs wireless communication, and the controller may perform switching for each communication counterpart and/or each item of information to be transmitted to use either the first communicator or the third communicator for transmission.

The controller may permit communication by the first communicator and the third communicator in a case where the accessory is attached.

The controller may permit generation of the aerosol in a case where the accessory is attached.

In order to solve the aforementioned problems, another aspect of the present invention provides a control method executed by an inhaler device that uses a substrate to generate an aerosol to be inhaled by a user. The control method includes switching control of wireless communication performed by the inhaler device when an accessory to be detachably attached to the inhaler device is detected as being attached to the inhaler device.

In order to solve the aforementioned problems, another aspect of the present invention provides a program causing a computer to execute a process. The computer controls an inhaler device that uses a substrate to generate an aerosol to be inhaled by a user. The process includes switching control of wireless communication performed by the inhaler device when an accessory to be detachably attached to the inhaler device is detected as being attached to the inhaler device.

### Advantageous Effects of Invention

As described above, the present invention provides a new mechanism for communication performed by an inhaler device that has a communication function and to which an accessory is attachable.

### Brief Description of Drawings

[Fig. 1] Fig. 1 is a schematic diagram of an inhaler device according to a first configuration example.
[Fig. 2] Fig. 2 is a schematic diagram of an inhaler device according to a second configuration example.
[Fig. 3] Fig. 3 illustrates an example of the configuration of a distribution system according to this embodiment.
[Fig. 4] Fig. 4 illustrates an example of an accessory to be attached to the inhaler device according to the second configuration example of this embodiment.
[Fig. 5] Fig. 5 is a flowchart illustrating an example of the flow of processing executed in the inhaler device according to this embodiment.

### Description of Embodiments

Preferred embodiments of the present invention will be described in detail below with reference to the appended drawings. In this description and the drawings, structural elements having substantially identical functional configurations will be given the same reference signs, and redundant descriptions thereof will be omitted.

Furthermore, in this description and the drawings, elements having substantially identical functional configurations may sometimes be differentiated from each other by adding a different alphabet to the suffix of the same reference sign. For example, a plurality of elements having substantially identical functional configurations are differentiated from each other as in inhaler devices 100A and 100B, where necessary. However, if it is not necessary to particularly differentiate a plurality of elements having substantially identical functional configurations from each other, the same reference sign will be used. For example, if the inhaler devices 100A and 100B do not particularly need to be differentiated from each other, they will simply be referred to as "inhaler devices 100".

### 1. Configuration example of inhaler device

An inhaler device generates material to be inhaled by a user. In the example described below, the material generated by the inhaler device is an aerosol. Alternatively, the material generated by the inhaler device may be gas.

### (1) First configuration example

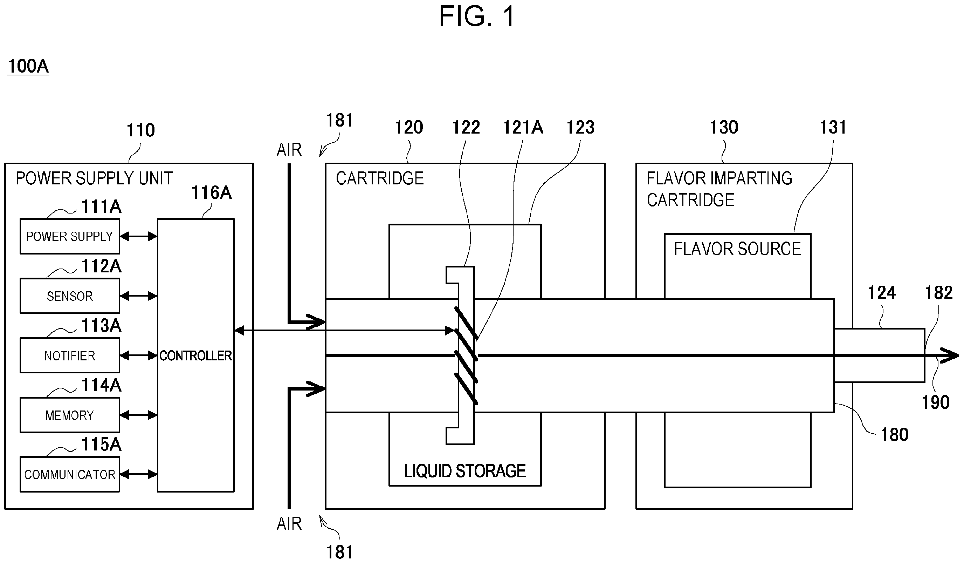

Fig. 1 is a schematic diagram of the inhaler device according to the first configuration example. As illustrated in Fig. 1, an inhaler device 100A according to the present configuration example includes a power supply unit 110, a cartridge 120, and a flavor imparting cartridge 130. The power supply unit 110 includes a power supply 111A, a sensor 112A, a notifier 113A, a memory 114A, a communicator 115A, and a controller 116A. The cartridge 120 includes a heater 121A, a liquid guide 122, and a liquid storage 123. The flavor imparting cartridge 130 includes a flavor source 131 and a mouthpiece 124. In the cartridge 120 and the flavor imparting cartridge 130, an airflow path 180 is defined.

The power supply 111A stores electric power. The power supply 111A supplies electric power to the structural elements of the inhaler device 100A under the control of the controller 116A. The power supply 111A may be a rechargeable battery such as a lithium ion secondary battery.

The sensor 112A acquires various items of information regarding the inhaler device 100A. In an example, the sensor 112A may be a pressure sensor such as a microphone condenser, a flow sensor, or a temperature sensor, and acquire a value generated in accordance with the user's inhalation. In another example, the sensor 112A may be an input device that receives information input by the user, such as a button or a switch.

The notifier 113A provides information to the user. The notifier 113A may be a light-emitting device that emits light, a display device that displays an image, a sound output device that outputs sound, or a vibration device that vibrates.

The memory 114A stores various items of information for operation of the inhaler device 100A. The memory 114A may be a non-volatile storage medium such as flash memory.

The communicator 115A is a communication interface capable of communication in conformity with any wired or wireless communication standard. Such a communication standard may be, for example, Wi-Fi (registered trademark) or Bluetooth (registered trademark).

The controller 116A functions as an arithmetic processing unit and a control circuit, and controls the overall operations of the inhaler device 100A in accordance with various programs. The controller 116A includes an electronic circuit such as a central processing unit (CPU) and a microprocessor, for example.

The liquid storage 123 stores an aerosol source. The aerosol source is atomized to generate an aerosol. The aerosol source is a liquid such as polyhydric alcohol and water. Examples of the polyhydric alcohol include glycerine and propylene glycol. The aerosol source may include a flavor component that is either derived from tobacco or not derived from tobacco. For the inhaler device 100A that is a medical inhaler such as a nebulizer, the aerosol source may include a medicine.

The liquid guide 122 guides, from the liquid storage 123, the aerosol source that is the liquid stored in the liquid storage 123, and holds the aerosol source. The liquid guide 122 is, for example, a wick formed by twining fiber material such as glass fiber or porous material such as porous ceramic. In this case, the capillary action of the wick guides the aerosol source stored in the liquid storage 123.

The heater 121A heats the aerosol source to atomize the aerosol source and generate the aerosol. In the example illustrated in Fig. 1, the heater 121A includes a coil wound around the liquid guide 122. When the heater 121A produces heat, the aerosol source held by the liquid guide 122 is heated and atomized to generate the aerosol. The heater 121A produces heat when receiving electric power from the power supply 111A. In an example, the electric power may be supplied in response to the sensor 112A detecting a start of the user's inhalation and/or an input of predetermined information. Subsequently, the supply of the electric power may be stopped in response to the sensor 112A detecting an end of the user's inhalation and/or an input of predetermined information.

The flavor source 131 is a structural element for imparting a flavor component to the aerosol. The flavor source 131 may include a flavor component that is either derived from tobacco or not derived from tobacco.

The airflow path 180 is a flow path of air to be inhaled by the user. The airflow path 180 has a tubular structure having an air inlet hole 181 and an air outlet hole 182 at both ends. The air inlet hole 181 is an inlet of air into the airflow path 180, and the air outlet hole 182 is an outlet of the air from the airflow path 180. The liquid guide 122 is on the airflow path 180 at an upstream position (closer to the air inlet hole 181), and the flavor source 131 is on the airflow path 180 at a downstream position (closer to the air outlet hole 182). Air flowing in through the air inlet hole 181 when the user inhales mixes with the aerosol generated by the heater 121A. Subsequently, as indicated by an arrow 190, the mixture fluid of the aerosol and the air passes through the flavor source 131 and is conveyed to the air outlet hole 182. When the mixture fluid of the aerosol and the air passes through the flavor source 131, the flavor component included in the flavor source 131 is imparted to the aerosol.

The mouthpiece 124 is to be held in a mouth of the user during inhalation. The mouthpiece 124 has the air outlet hole 182. When the user inhales with the mouthpiece 124 in his/her mouth, the mixture fluid of the aerosol and the air enters the oral cavity of the user.

The configuration example of the inhaler device 100A has been described above. The inhaler device 100A is not limited to the above configuration, and may be configured in various ways as exemplified below.

In an example, the inhaler device 100A does not have to include the flavor imparting cartridge 130. In this case, the cartridge 120 includes the mouthpiece 124.

In another example, the inhaler device 100A may include various types of aerosol sources. Still another type of aerosol may be generated by mixing a plurality of types of aerosols generated from the plurality of types of aerosol sources in the airflow path 180 and causing a chemical reaction.

In addition, means for atomizing the aerosol source is not limited to heating by the heater 121A. For example, the means for atomizing the aerosol source may be vibration atomization or induction heating.

### (2) Second configuration example

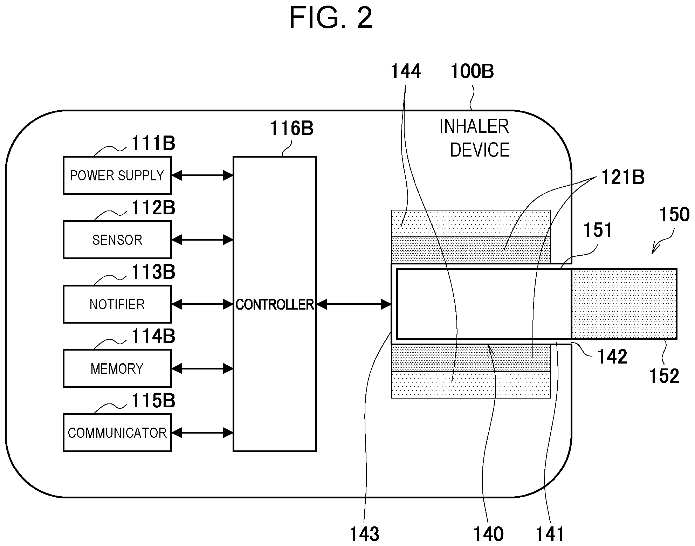

Fig. 2 is a schematic diagram of the inhaler device according to the second configuration example. As illustrated in Fig. 2, an inhaler device 100B according to the present configuration example includes a power supply 111B, a sensor 112B, a notifier 113B, a memory 114B, a communicator 115B, a controller 116B, a heater 121B, a holder 140, and a heat insulator 144.

The power supply 111B, the sensor 112B, the notifier 113B, the memory 114B, the communicator 115B, and the controller 116B are substantially the same as the respective corresponding structural elements included in the inhaler device 100A according to the first configuration example.

The holder 140 has an internal space 141, and holds a stick substrate 150 in a manner partially accommodated in the internal space 141. The holder 140 has an opening 142 that allows the internal space 141 to communicate with outside. The holder 140 accommodates the stick substrate 150 that is inserted into the internal space 141 through the opening 142. For example, the holder 140 may be a tubular body having the opening 142 and a bottom 143 on its ends, and may define the pillar-shaped internal space 141. The holder 140 also has a function for defining a flow path of air to be supplied to the stick substrate 150. For example, an air inlet hole serving as an inlet for the air toward the aforementioned flow path is disposed at the bottom 143. On the other hand, an air outlet hole serving as an outlet for the air from the aforementioned flow path is the opening 142.

The stick substrate 150 includes a substrate 151 and an inhalation port 152. The substrate 151 includes an aerosol source. In this configuration example, the aerosol source is not limited to a liquid and may alternatively be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the air inlet hole (not illustrated), and the air and an aerosol generated from the substrate 151 reach inside the mouth of the user.

The heater 121B has a configuration similar to that of the heater 121A according to the first configuration example. In the example illustrated in Fig. 2, the heater 121B has a film-like shape and surrounds the outer circumference of the holder 140. Subsequently, heat produced from the heater 121B heats the substrate 151 of the stick substrate 150 from the outer circumference, generating the aerosol.

The heat insulator 144 prevents heat from transferring from the heater 121B to the other structural elements. For example, the heat insulator 144 may be a vacuum heat insulator or an aerogel heat insulator.

The configuration example of the inhaler device 100B has been described above. The inhaler device 100B is not limited to the above configuration, and may be configured in various ways as exemplified below.

In an example, the heater 121B may have a blade-like shape, and may be disposed so that the heater 121B protrudes from the bottom 143 of the holder 140 toward the internal space 141. In this case, the heater 121B having the blade-like shape is inserted into the substrate 151 of the stick substrate 150 and heats the substrate 151 of the stick substrate 150 from its inside. In another example, the heater 121B may be disposed so that the heater 121B covers the bottom 143 of the holder 140. In still another example, the heater 121B may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. Examples of the opening/closing mechanism include a hinge. In addition, the holder 140 may sandwich the stick substrate 150 inserted into the internal space 141 by opening and closing the outer shell. In this case, the heater 121B may be at the sandwiching position of the holder 140 and may produce heat while pressing the stick substrate 150.

In addition, means for atomizing the aerosol source is not limited to heating by the heater 121B. For example, the means for atomizing the aerosol source may be induction heating.

In addition, the inhaler device 100B may also include the heater 121A, the liquid guide 122, the liquid storage 123, and the airflow path 180 according to the first configuration example, and the air outlet hole 182 of the airflow path 180 may also serve as an air inlet hole for the internal space 141. In this case, a mixture fluid of the air and an aerosol generated by the heater 121A flows into the internal space 141, mixes further with an aerosol generated by the heater 121B, and then reaches the oral cavity of the user.

### 2. Technical features

### 2.1. System configuration example

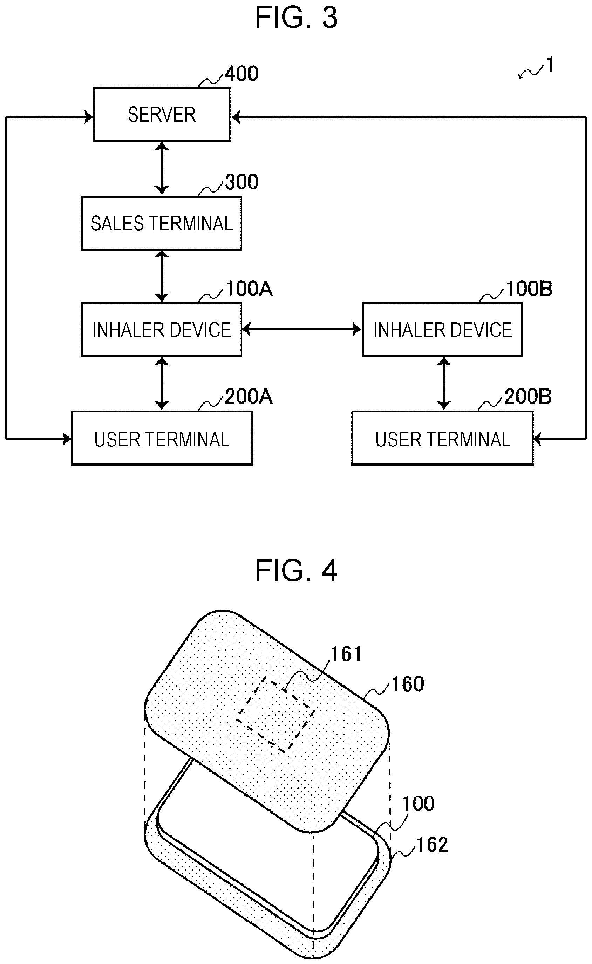

Fig. 3 illustrates an example of the configuration of a distribution system 1 according to this embodiment. As illustrated in Fig. 3, the distribution system 1 includes the inhaler devices 100, user terminals 200, a sales terminal 300, and a server 400. Although Fig. 3 illustrates an example where the distribution system 1 includes two inhaler devices 100 (100A and 100B), two user terminals 200 (200A and 200B), a single sales terminal 300, and a single server 400, the number of devices included in the distribution system 1 is not limited to this example.

### (1) Configuration of each inhaler device 100

An inhaler device generates material to be inhaled by a user. The material generated by the inhaler device is described below as being an aerosol. Alternatively, the material generated by the inhaler device may be a solid. The act of the user inhaling the material generated by the inhaler device may also be referred to as "inhalation" or "puff' hereinafter.

Each inhaler device 100 according to this embodiment uses a substrate to generate an aerosol to be inhaled by the user. A heater 121 is an example of a generator that generates an aerosol. The cartridge 120 and the flavor imparting cartridge 130 according to the first configuration example and the stick substrate 150 according to the second configuration example are examples of the substrate according to the present invention. The inhaler device 100 generates an aerosol by using the substrate attached to the inhaler device 100. In the first configuration example, the cartridge 120 and the flavor imparting cartridge 130 connected to the power supply unit 110 are examples of the substrate attached to the inhaler device 100. In the second configuration example, the stick substrate 150 fitted in the inhaler device 100 is an example of the substrate attached to the inhaler device 100.

The inhaler device 100 may any configuration example selected from the first configuration example or the second configuration example described above. In Fig. 3, the inhaler device 100 to be used by a user A is the inhaler device 100A, and the inhaler device 100 to be used by a user B is the inhaler device 100B. In other words, the configuration of the inhaler device 100A in Fig. 3 does not necessarily have to match the configuration illustrated in Fig. 1, and may match the configuration illustrated in, for example, Fig. 2. Likewise, the configuration of the inhaler device 100B in Fig. 3 does not necessarily have to match the configuration illustrated in Fig. 2, and may match the configuration illustrated in, for example, Fig. 1.

A communicator 115 according to this embodiment is capable of performing wireless communication in conformity with a short-range wireless communication standard, such as NFC (near field communication) or Bluetooth (registered trademark).

### (2) Configuration of each user terminal 200

Each user terminal 200 is a terminal device used by the user of the corresponding inhaler device 100. For example, the user terminal 200 may be a smartphone, a tablet terminal, or a wearable device. The inhaler device 100 and the user terminal 200 that are used by the same user are associated with each other. For example, the user may register information about the inhaler device 100 in the user terminal 200, register information about the user terminal 200 in the inhaler device 100, or register information indicating that the inhaler device 100 and the user terminal 200 are used by the same user in the server 400.

The user terminal 200 performs communication with another device in conformity with any wired or wireless communication standard. In one example, the user terminal 200 may be capable of performing wireless communication in conformity with a short-range wireless communication standard, such as NFC (near field communication) or Bluetooth (registered trademark).

The function of the user terminal 200 may be implemented by using an application. The application may be preinstalled or may be downloaded. Alternatively, the function of the user terminal 200 may be implemented by using PWA (progressive web application).

### (3) Configuration of sales terminal 300

The sales terminal 300 is a terminal device that performs substrate sales processing. For example, the sales terminal 300 may be a cash register or a POS (point-of-sales) terminal. In that case, the sales terminal 300 is installed in a store that sells substrates. Examples of the substrate sales processing include accounting processing related to exchanging of money and sales management processing involving registering the brand and the number of sold substrates. A user using the sales terminal 300 is normally a store clerk.

The sales terminal 300 performs communication with another device in conformity with any wired or wireless communication standard. In one example, the sales terminal 300 may be capable of performing wireless communication in conformity with a short-range wireless communication standard, such as NFC (near field communication) or Bluetooth (registered trademark).

### (4) Configuration of server 400

The server 400 is an information processor that provides various types of services related to the inhaler devices 100. For example, the server 400 provides a membership service to the user of each inhaler device 100. The server 400 collects and accumulates information about each inhaler device 100, analyzes the accumulated information, and provides the membership service in accordance with the analysis result. For example, each user accesses the server 400 to register his/her membership, so as to be able to receive various types of membership services, such as receive provided information about the corresponding inhaler device 100.

### 2.2. Features related to attachment of accessory

### (1) Configuration of front panel

An accessory to be detachably attached to each inhaler device 100 may be attached to the inhaler device 100. Fig. 4 illustrates an example of the accessory to be attached to the inhaler device 100 according to the second configuration example of this embodiment. As illustrated in Fig. 4, a front panel 160 may be detachably attached to the inhaler device 100. The front panel 160 and a back panel 162 are joined to each other with the inhaler device 100 interposed therebetween, so as to form an outer shell that surrounds the outer periphery of the inhaler device 100. The front panel 160 is an example of the accessory.

The front panel 160 includes a communicator 161. The function of the communicator 161 is similar to that of the communicator 115. In order to differentiate the communicator 115 of the inhaler device 100 and the communicator 161 of the front panel 160 from each other more clearly, the communicator 115 may also be referred to as "main communicator 115", and the communicator 161 may also be referred to as "front-panel communicator 161".

In this embodiment, the main communicator 115 and the front-panel communicator 161 each perform wireless communication. The main communicator 115 is an example of a first communicator that performs wireless communication. The front-panel communicator 161 is an example of a second communicator that performs wireless communication.

The wireless communication by the main communicator 115 and the wireless communication by the front-panel communicator 161 are short-range wireless communication, such as NFC or Bluetooth. With this configuration, the main communicator 115 and the front-panel communicator 161 are each capable of communicating with another device located within a short range.

The communication method used by the main communicator 115 and the communication method used by the front-panel communicator 161 are desirably different from each other. As will be described later, this configuration enables communication that employs a communication method suitable for the communication counterpart and the transmission information to be transmitted.

For example, the communication method used by the main communicator 115 may be Bluetooth, and the communication method used by the front-panel communicator 161 may be NFC. The communicable range of NFC is smaller than the communicable range of Bluetooth. The transmission rate of NFC is lower than the transmission rate of Bluetooth. On the other hand, NFC does not require pairing, whereas Bluetooth requires pairing. Because NFC and Bluetooth have different characteristics in this manner, it is conceivable that the situations in which NFC and Bluetooth excel at are different. In that regard, with this configuration, the main communicator 115 and the front-panel communicator 161 can be properly used in accordance with the characteristics of their communication methods.

### (2) Control performed in response to attachment of front panel

The controller 116 switches the control of the main communicator 115 when the front panel 160 is detected as being attached to the inhaler device 100. For example, the controller 116 switches to the operation of the main communicator 115 in accordance with the function that the attached front panel 160 has. This configuration enables optimization of the operation of the main communicator 115 in accordance with whether or not the front panel 160 is attached. The detection of whether the front panel 160 is attached will be described in detail later.

The controller 116 may control the main communicator 115 such that the main communicator 115 transmits information different from information to be transmitted by the front-panel communicator 161. For example, the controller 116 controls the main communicator 115 such that the main communicator 115 transmits all items of the transmission information if the front panel 160 is not attached, or such that the main communicator 115 transmits one or more items of the transmission information if the front panel 160 is attached. The transmission information will be described in detail later. With this configuration, the inhaler device 100 can cause either the main communicator 115 or the front-panel communicator 161 to transmit the transmission information without redundancy. In a case where the communication method varies between the main communicator 115 and the front-panel communicator 161, a more appropriate communication method can be used to transmit each item of the transmission information.

The controller 116 may control the main communicator 115 such that the main communicator 115 communicates with a communication counterpart different from the communication counterpart of the front-panel communicator 161. For example, in a case where the communication counterpart of the front-panel communicator 161 is the sales terminal 300, the controller 116 may control the main communicator 115 such that the main communicator 115 communicates with the corresponding user terminal 200. With this configuration, the inhaler device 100 can cause either the main communicator 115 or the front-panel communicator 161 to communicate with the communication counterpart. In a case where the communication method varies between the main communicator 115 and the front-panel communicator 161, a more appropriate communication method can be used for the communication with each communication counterpart.

The above description relates to a case where the controller 116 controls the main communicator 115. In addition to controlling the main communicator 115, the controller 116 may control the front-panel communicator 161. In one example, the controller 116 and the front-panel communicator 161 may be electrically connected to each other, and the controller 116 may transmit a control signal to the front-panel communicator 161 so as to control the front-panel communicator 161. In another example, the main communicator 115 and the front-panel communicator 161 may be wirelessly communicable with each other, and the controller 116 may wirelessly transmit a control signal to the front-panel communicator 161 via the main communicator 115 so as to control the front-panel communicator 161. This configuration enables optimization of the operation of the main communicator 115 and the front-panel communicator 161, as compared with the case where the main communicator 115 alone is controlled.

The controller 116 may control the front-panel communicator 161 such that the front-panel communicator 161 transmits information different from information to be transmitted by the main communicator 115. For example, the controller 116 controls the main communicator 115 such that the main communicator 115 transmits one or more items of the transmission information, and controls the front-panel communicator 161 such that the front-panel communicator 161 transmits the remaining one or more items of the transmission information. This configuration enables the inhaler device 100 to perform communication using the appropriate one of the main communicator 115 and the front-panel communicator 161 for the transmission information.

The controller 116 may control the front-panel communicator 161 such that the front-panel communicator 161 communicates with a communication counterpart different from the communication counterpart of the main communicator 115. For example, the controller 116 controls the main communicator 115 such that the main communicator 115 communicates with the user terminal 200, and controls the front-panel communicator 161 such that the front-panel communicator 161 communicates with the sales terminal 300. This configuration enables the inhaler device 100 to perform communication using the appropriate one of the main communicator 115 and the front-panel communicator 161 for the communication counterpart.

### (3) Detection of detachment of front panel 160

The inhaler device 100 detects that the front panel 160 has been attached and detached.

In one example, the inhaler device 100 may electrically detect the attachment and detachment of the front panel 160. For example, the inhaler device 100 and the front panel 160 are electrically connectable to each other. A sensor 112 detects whether the front panel 160 is attached or detached based on an electrical connection or an electrical disconnection between the inhaler device 100 and the front panel 160. The electrical resistance at the time of the connection may vary for every front panel 160. In that case, the sensor 112 may identify the front panel 160 attached to the inhaler device 100 based on the electrical resistance.

In another example, the inhaler device 100 may physically detect the attachment and detachment of the front panel 160. For example, the inhaler device 100 may have a pressure sensor serving as the sensor 112 in an area where the inhaler device 100 comes into contact with the front panel 160. In that case, the sensor 112 may detect the attachment and detachment of the front panel 160 in accordance with the magnitude of the pressure. The pressure applied to the pressure sensor may vary for every front panel 160. In that case, the sensor 112 may identify the front panel 160 attached to the inhaler device 100 based on the magnitude of the pressure.

With regard to the identification of the front panel 160, the front panel 160 may be uniquely identified, or the function (e.g., the presence and absence of a communication function and the communication method) that the front panel 160 has may be identified.

### (4) Transmission information

An example of the transmission information to be transmitted by the main communicator 115 or the front-panel communicator 161 will be described below. The transmission information includes at least the information described below.

### Brand information

The transmission information may include identification information about the substrate. The identification information about the substrate is used for identifying the brand (i.e., the type) of the substrate. The identification information about the substrate may also be referred to as "brand information" hereinafter. In a case where the brand information is transmitted to the sales terminal 300, the brand information is treated as information indicating the desired brand for purchase. Therefore, the transmission of the brand information as the transmission information to the sales terminal 300 enables enhanced usability at the time of purchase of the substrate.

### Profile information

The transmission information may include profile information indicating a profile that defines substrate heating operation performed by the inhaler device 100 for generating an aerosol. The inhaler device 100 generates an aerosol by heating the substrate in accordance with the profile indicated in the profile information.

The profile in the first configuration example is information that defines the time period in which electricity is supplied to the heater 121A and the amount of electricity (e.g., voltage) to be supplied thereto per unit time period. The controller 116 performs control such that the amount of electricity to be supplied per unit time period defined in the profile is supplied from the power supply 111 to the heater 121A for the electricity-supplying time period defined in the profile. For example, such electricity-supplying control is performed every time a puff is detected.

The profile in the second configuration example is information that defines the relationship between the time period elapsed from the start of heating by the heater 121B and the temperature of the heater 121B. The controller 116 controls the heater 121B such that a temperature change similar to a temperature change in the profile is realized in the heater 121B. The heater 121B may include a conductive track including a resistor, and the sensor 112 may detect the temperature of the heater 121B based on the electrical resistance of the conductive track. The control of the heater 121B may be implemented by controlling, for example, the electricity supplied from the power supply 111 to the heater 121B. The electricity-supplying control may be performed in accordance with, for example, PWM (pulse width modulation) control.

The profile information may be the profile itself. With regard to the profile, for example, a profile settable by being provided by the membership service may be set in advance. In that case, the profile information may be identification information indicating the profile. The identification information indicating the profile contains a smaller amount of data, as compared with the profile itself, so that the communication load can be reduced when the identification information is exchanged with another device. The profile may be customizable by the user. For example, a parameter, such as the electricity-supplying time period, may be adjusted by the user.

### Combination of brand information and profile information

The brand information and the profile information may be associated with each other. For example, the profile preferred by the user may vary for every substrate, and the brand information and the profile suitable for the substrate of the brand indicated in the brand information may be associated with each other. Thus, the brand information and the profile information may be transmitted in association with each other as the transmission information. Furthermore, the transmission information may include identification information indicating a combination of the brand information and the profile information. The amount of data of the identification information indicating the combination of the brand information and the profile information is designed to be smaller than the total sum of the amount of data of the brand information and the amount of data of the profile information, so that the communication load can be reduced when the identification information is exchanged with another device. Examples of the identification information indicating the combination of the brand information and the profile information are indicated in Table 1 below.

### [Table 1]

**Table 1. Examples of identification information indicating combination of brand information and profile information**

| Identification Information | Brand Information | Profile Information | ... |
|---|---|---|---|
| 0001 | brand_X | P | ... |
| 0002 | brand_X | Q | ... |
| 0003 | brand_Y | P | |
| ... | ... | ... | ... |

### Device ID

The transmission information may include identification information about the inhaler device 100. The identification information about the inhaler device 100 is used for uniquely identifying the inhaler device 100. The identification information about the inhaler device 100 may also be referred to "device ID" hereinafter.

### User ID

The transmission information may include identification information about the user using the inhaler device 100. The identification information about the user is used for uniquely identifying the user. The identification information about the user may also be referred to as "user ID" hereinafter. The user ID may be personal information, such as the name of the user, or may be an account name registered in the membership service.

### Authentication information

The transmission information may include authentication information. The authentication information indicates whether the user is qualified to purchase substrates. For example, the authentication information includes information for proving the age of the user.

### (5) Details of communication function

The communication function equipped in the inhaler device 100 and the front panel 160 is conceivable in various ways.

In one example, the communication function may be implemented by using an NFC tag. An NFC tag includes an antenna for communication using NFC and an IC (integrated circuit) that performs processing for communication using NFC, and is typically thin in the form of a sticker. Information can be written into and read from the NFC tag via NFC. In other words, in addition to the communication function, the NFC tag also has a storage function for storing information. For reading and writing information from and into the NFC tag, an NFC reader-writer is used. An NFC reader-writer is a device that serves both as an NFC reader capable of reading information from the NFC tag and as an NFC writer capable of writing information into the NFC tag.

In a case where the main communicator 115 is configured as an NFC tag, the NFC tag also functions as a memory 114. Specifically, information is read from and written into the NFC tag equipped in the inhaler device 100. In a case where the front-panel communicator 161 is configured as an NFC tag, the NFC tag also functions a memory (also referred to as "front-panel memory" hereinafter) equipped in the front panel 160. Specifically, information is read from and written into the NFC tag equipped in the front panel 160.

In one example, the communication function may be implemented by using an NFC communication module. An NFC communication module is a communication module capable of performing communication using NFC, and supports three communication modes, that is, a card emulation mode, a reader-writer mode, and a P2P (peer-to-peer) mode. In a case where the NFC communication module operates in the card emulation mode, the NFC communication module itself operates as an NFC tag to read and write information from and into an NFC reader-writer. In a case where the NFC communication module operates in the reader-writer mode, the NFC communication module itself operates as an NFC tag to read and write information from and into the NFC tag. In a case where the NFC communication module operates in the P2P mode, the NFC communication module communicates with another NFC communication module operating in the P2P mode.

In a case where the main communicator 115 is configured as an NFC communication module, information received by the main communicator 115 is stored in the memory 114, and information stored in the memory 114 is transmitted to the main communicator 115. In a case where the front-panel communicator 161 is configured as an NFC communication module, the front-panel communicator 161 performs communication based on control by the controller 116. Information received by the front-panel communicator 161 is stored in the memory 114, and information stored in the memory 114 is transmitted by the front-panel communicator 161.

In one example, the communication function may be implemented by using a Bluetooth communication module. A Bluetooth communication module is a communication module capable of performing communication using Bluetooth. The Bluetooth communication module establishes a connection with and communicates with another paired Bluetooth communication module.

In a case where the main communicator 115 is configured as a Bluetooth communication module, information received by the main communicator 115 is stored in the memory 114, and information stored in the memory 114 is transmitted by the main communicator 115. In a case where the front-panel communicator 161 is configured as a Bluetooth communication module, the front-panel communicator 161 performs communication based on control by the controller 116. Information received by the front-panel communicator 161 is stored in the memory 114, and information stored in the memory 114 is transmitted by the front-panel communicator 161.

If it is not particularly necessary to distinguish whether the storing subject is the memory 114 or the front-panel memory (e.g., an NFC tag functioning as the front-panel communicator 161) in the following description, the storing subject will be described as the inhaler device 100. For example, the expression "the inhaler device 100 stores information" may include both the meaning of the memory 114 storing the information and the meaning of the front-panel memory storing the information.

The inhaler device 100 stores the transmission information. The transmission information is stored at least by either the memory 114 or the front-panel memory.

If it is not particularly necessary to distinguish whether the communicating subject is the main communicator 115 or the front-panel communicator 161 in the following description, the communicating subject will be described as the inhaler device 100. For example, the expression "the inhaler device 100 performs communication" may include both the meaning of the main communicator 115 performing the communication and the meaning of the front-panel communicator 161 performing the communication.

The inhaler device 100 transmits the transmission information. The transmission information is transmitted at least by either the main communicator 115 or the front-panel communicator 161.

### (6) Processing in user terminal 200

The user terminal 200 manages information stored in the inhaler device 100. In one example, the user terminal 200 synchronizes with the inhaler device 100. Specifically, the user terminal 200 writes information into the inhaler device 100 (i.e., the memory 114 and/or the front-panel memory) and reads information from the inhaler device 100 and stores the information, such that the information stored in the inhaler device 100 and the information stored in the user terminal 200 match each other. The information synchronized in this manner may also be referred to as "synchronization information" hereinafter. The synchronization information includes the transmission information mentioned above. The function for managing the information stored in the inhaler device 100 may be implemented by using a dedicated application (also referred to as "management application" hereinafter).

For example, the user terminal 200 may acquire the brand information from the membership service provided by the server 400 or from a website and write the brand information into the inhaler device 100. In another example, the user terminal 200 may write the brand information acquired by applying image recognition to a captured image of the package of the substrate into the inhaler device 100. The same applies to the profile information.

The user terminal 200 performs communication for synchronizing with the inhaler device 100 when a predetermined condition is satisfied. The predetermined condition may include a condition where the distance between the user terminal 200 and the inhaler device 100 is close to a short-range wireless communicable range. The predetermined condition may include a condition where the management application is being activated in the user terminal 200. The predetermined condition may include a condition where there is a difference between the synchronization information stored in the user terminal 200 and the information stored in the inhaler device 100.

The user terminal 200 may periodically perform polling to detect an inhaler device 100 present in the short-range wireless communicable range. If the user terminal 200 detects an inhaler device 100 present in the short-range wireless communicable range as a result of performing polling, the user terminal 200 may activate the management application. When activated, the management application may automatically perform synchronization with the inhaler device 100.

Normally, the user terminal 200 manages information stored in the inhaler device 100 associated with the user terminal 200 (i.e., the inhaler device 100 used by the same user). For example, the user terminal 200A manages information stored in the inhaler device 100A.

### (7) Communication with another inhaler device 100

The inhaler device 100 may exchange the transmission information with another inhaler device 100. The exchanging of information between inhaler devices 100, that is, the receiving and storing of information stored in one of two inhaler devices 100 by the other inhaler device 100, may also be referred to as "copying" hereinafter.

The information to be copied between the inhaler devices 100 may include the brand information. The brand information is treated by the sales terminal 300 as information indicating the desired brand for purchase, as will be described later. Therefore, users may recommend preferred brands to each other and purchase the substrates of the recommended brands.

The information to be copied between the inhaler devices 100 may include the profile information. In that case, users may recommend preferred profiles to each other and cause the respective inhaler devices 100 to execute heating in accordance with the recommended profiles.

The information to be copied between the inhaler devices 100 may be exchanged while being associated with the brand information and the profile information. For example, the information to be copied between the inhaler devices 100 may include the identification information indicating the combination of the brand information and the profile information. With this configuration, users may recommend preferred combinations of brands and profiles to each other and try heating with the recommended brands in accordance with the recommended profiles.

### (8) Processing in sales terminal 300

The sales terminal 300 receives the transmission information from each inhaler device 100. For example, when the distance between the sales terminal 300 and the inhaler device 100 is close to the short-range wireless communicable range, the inhaler device 100 and the sales terminal 300 exchange information with each other by performing short-range wireless communication. With this configuration, the sales terminal 300 receives information from the inhaler device 100 that has approached the short-range wireless communicable range, so that interference can be prevented even when, for example, the store is crowded.

When receiving the transmission information from the inhaler device 100, the sales terminal 300 performs processing in accordance with the received information. With this configuration, the sales terminal 300 can acquire information from the inhaler device 100 instead of the user terminal 200 and perform processing in accordance with the acquired information. Therefore, a troublesome process involving the user operating the user terminal 200 for transmitting information can be reduced, thereby achieving enhanced usability.

In one example, the sales terminal 300 may perform substrate selling processing in accordance with the information received from the inhaler device 100. For example, the sales terminal 300 may perform processing for selling the substrate of the brand indicated in the brand information received from the inhaler device 100 as the desired substrate for purchase by the user. With this configuration, the user can purchase the desired substrate for purchase without having to verbally designate the desired substrate to the store clerk.

In another example, the sales terminal 300 transmits the information received from the inhaler device 100 at least partially to the server 400. As will be described later, the server 400 accumulates and analyzes the received information and provides the membership service in accordance with the analysis result. Accordingly, the user can receive a preferred membership service that reflects the member's purchase behavior by simply purchasing a substrate by using the inhaler device 100, that is, without having to perform a troublesome process involving operating the user terminal 200 and transmitting information to the server 400.

In another example, the sales terminal 300 may perform authentication based on the authentication information received from the inhaler device 100. For example, the sales terminal 300 determines that the authentication is successful when the user's age indicated in the authentication information is above or equal to a predetermined age. Otherwise, the sales terminal 300 determines that the authentication has failed. This configuration can prevent a situation where a substrate is mistakenly sold to a user not qualified to purchase the substrate.

### (9) Processing in server 400

The server 400 collects the transmission information from the inhaler device 100 via the sales terminal 300. The server 400 accumulates and analyzes the collected information, and provides the membership service based on the analysis result.

In one example, the server 400 may compile the collected information for each item of brand information, so as to identify a brand that has been purchased in large numbers, that is, a brand that is popular among the members. Then, the server 400 may provide information for recommending the brand that is popular among the members as the membership service.

In another example, the server 400 may compile the collected information for each item of profile information, so as to identify a profile that has been used in large numbers, that is, a profile that is popular among the members. Then, the server 400 may provide information for recommending the profile that is popular among the members as the membership service.

In another example, an analysis for determining which brand's substrate has been sold to which user by the sales terminal 300, that is, which user has purchased which substrate, may be performed based on the combination of the user ID or the device ID and the brand information.

### (10) Flow of processing

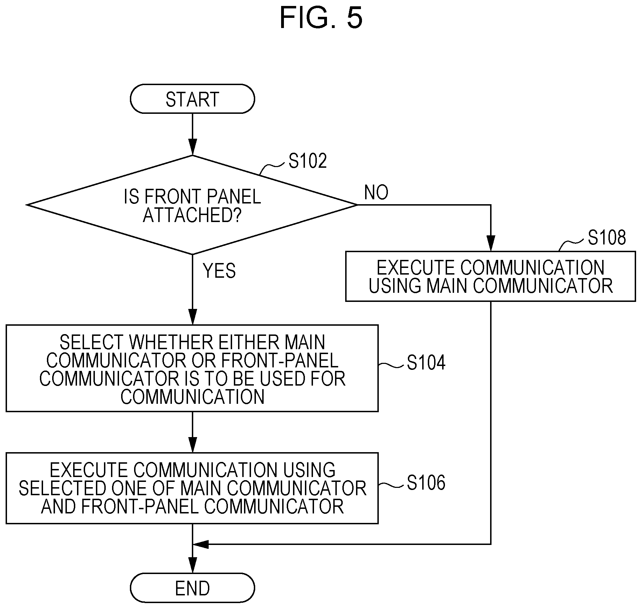

Fig. 5 is a flowchart illustrating an example of the flow of processing executed in each inhaler device 100 according to this embodiment.

As illustrated in Fig. 5, the controller 116 first determines whether or not the front panel 160 is attached to the inhaler device 100 (step S102).

If it is determined that the front panel 160 is attached to the inhaler device 100 (step S102: YES), the controller 116 selects whether the main communicator 115 or the front-panel communicator 161 is to be used for communication (step S104). For example, the controller 116 selects whether the main communicator 115 or the front-panel communicator 161 is to be used for communication in accordance with the communication counterpart and the transmission information. Then, the controller 116 executes communication using the selected main communicator 115 or front-panel communicator 161 (step S106).

On the other hand, if it is determined that the front panel 160 is not attached to the inhaler device 100 (step S102: NO), the controller 116 executes communication using the main communicator 115 (step S108).

### 2.3. Specific examples

### (1) First specific example

In this specific example, the main communicator 115 is configured as a Bluetooth communication module, and the front-panel communicator 161 is configured as an NFC tag.

In a case where the front panel 160 is not attached, the inhaler device 100 uses the main communicator 115 for all communication. On the other hand, in a case where the front panel 160 is attached, the inhaler device 100 uses the main communicator 115 for communication with the user terminal 200, and uses the front-panel communicator 161 for communication with the sales terminal 300.

In this specific example, NFC that does not require pairing is used for the communication between the inhaler device 100 and the sales terminal 300, thereby enabling enhanced usability at the time of purchase of the substrate. On the other hand, Bluetooth that requires pairing is used for the communication between the inhaler device 100 and the user terminal 200, thereby ensuring security.

In this specific example, communication between the inhaler devices 100 does not have to be performed. This is because, although NFC that does not require pairing is desirable for the communication between the inhaler devices 100, communication between NFC tags cannot be established.

### (2) Second specific example

In this specific example, the main communicator 115 is configured as a Bluetooth communication module, and the front-panel communicator 161 is configured as an NFC communication module.

In a case where the front panel 160 is not attached, the inhaler device 100 uses the main communicator 115 for all communication. On the other hand, in a case where the front panel 160 is attached, the inhaler device 100 uses the main communicator 115 for communication with the user terminal 200, and uses the front-panel communicator 161 for communication with the sales terminal 300 and other inhaler devices 100.

In this specific example, NFC that does not require pairing is used for the communication between the inhaler device 100 and the sales terminal 300 and other inhaler devices 100, thereby enabling enhanced usability at the time of purchase of the substrate as well as during an information copying process. On the other hand, Bluetooth that requires pairing is used for the communication between the inhaler device 100 and the user terminal 200, thereby ensuring security.

### 2.4. Modifications

Although the inhaler device 100 is described as having the main communicator 115 and the front panel 160 is described as having the front-panel communicator 161 in the above embodiment, the present invention is not limited to this example. As will be described below, either the inhaler device 100 or the front panel 160 does not have to have a communication function.

### (1) First modification

In this modification, the inhaler device 100 has two types of communication functions, and the front panel 160 does not have a communication function.

In addition to a first communicator that performs wireless communication, the inhaler device 100 further includes a third communicator that performs wireless communication. The first communicator may also be referred to as "first main communicator 115", and the third communicator may also be referred to as "second main communicator 115".

For every communication counterpart and/or every item of information to be transmitted, the controller 116 performs switching to use either the first main communicator 115 or the second main communicator 115 for transmission. With this configuration, the first main communicator 115 and the second main communicator 115 can be properly used in accordance with the circumstances. The communication method used by the first main communicator 115 and the communication method used by the second main communicator 115 are desirably different from each other. For example, the communication method used by the first main communicator 115 may be Bluetooth, and the communication method used by the second main communicator 115 may be NFC. With this configuration, the first main communicator 115 and the second main communicator 115 can be properly used in accordance with the characteristics of their communication methods.

In one example, the first main communicator 115 may be configured as a Bluetooth communication module, and the second main communicator 115 may be configured as an NFC tag.

The inhaler device 100 uses the first main communicator 115 for communication with the user terminal 200. Since Bluetooth that requires pairing is used for the communication between the inhaler device 100 and the user terminal 200, security can be ensured. On the other hand, the inhaler device 100 uses the second main communicator 115 for communication with the sales terminal 300. Since NFC that does not require pairing is used for the communication between the inhaler device 100 and the sales terminal 300, the usability at the time of purchase of the substrate can be enhanced. Communication between the inhaler devices 100 does not have to be performed. This is because, although NFC that does not require pairing is desirable for the communication between the inhaler devices 100, communication between NFC tags cannot be established.

In this modification, the controller 116 switches the control of the inhaler device 100 when the front panel 160 is attached to the inhaler device 100.

In one example, the controller 116 may permit communication by the first main communicator 115 and the second main communicator 115 when the front panel 160 is attached. On the other hand, the controller 116 may prohibit communication by the first main communicator 115 and the second main communicator 115 when the front panel 160 is not attached. With this configuration, the inhaler device 100 can perform communication limitedly when the front panel 160 is attached.

In another example, the controller 116 may permit generation of an aerosol when the front panel 160 is attached. The controller 116 may prohibit generation of an aerosol when the front panel 160 is not attached. In that case, the front panel 160 supplies electricity from the power supply 111 to the heater 121 and heats the substrate limitedly when the front panel 160 is attached, so that an aerosol can be generated. The front panel 160 is formed of, for example, a heat-resistant member and protects the user's hands from heat generated from the heating of the substrate. In this regard, with this configuration, heating is performed limitedly when the front panel 160 is attached, so that a situation where the user suffers a burn as a result of heating being performed when the front panel 160 is in an unattached state can be prevented.

### (2) Second modification

In this modification, the inhaler device 100 does not have a communication function, and the front panel 160 is equipped with a communication function.

In a case where the front panel 160 is not attached, the inhaler device 100 does not perform communication. On the other hand, in a case where the front panel 160 is attached, the inhaler device 100 uses the front-panel communicator 161 for all communication.

According to this modification, the inhaler device 100 can perform communication when the front panel 160 is attached.

### 3. Supplemental remarks

Although preferred embodiments of the present invention have been described in detail above with reference to the appended drawings, the present invention is not limited to these examples. It is apparent to a person with a common knowledge of the technical field to which the present invention belongs that various modifications and alterations are conceivable within the scope of the technical ideas defined in the claims, and it is to be understood that such modifications and alterations naturally belong to the technical scope of the present invention.

For example, although the front panel 160 is described as an example of an accessory to be attached to the inhaler device 100 in the above embodiment, the present invention is not limited to this example. The accessory may be any component, such as a strap or a sticker, attachable to and detachable from the inhaler device 100.

For example, although an example where an accessory is to be attached to the inhaler device 100 is described in the above embodiment, the present invention is not limited to this example. The present invention is applicable to any device other than the inhaler device 100. For example, an accessory, such as a smartphone case, may be detachably attached to a smartphone. The control of the smartphone may be switched when the accessory is attached or detached.

The embodiments and the modifications described above may be combined, where appropriate. For example, in a case where the inhaler device 100 has the main communicator 115 and the front panel 160 has the front-panel communicator 161, switching between permission and prohibition of communication by the main communicator 115 and between permission and prohibition of aerosol generation may be performed depending on whether the front panel 160 is attached or detached.

The series of processing by each device described in this description may be implemented by using any of software, hardware, and a combination of software and hardware. A program serving as software is stored in advance in a storage medium (non-transitory medium) provided inside or outside each device. For example, each program is loaded into a RAM at the time of execution by a computer, and is executed by a processor, such as a CPU. The aforementioned storage medium is, for example, a magnetic disk, an optical disk, a magneto-optical disk, or a flash memory. The aforementioned computer program may be distributed via, for example, a network without using a storage medium.

The processing described using the flowchart and the sequence diagram in this description does not necessarily have to be executed in the illustrated order. Some of the steps may be executed concurrently. Moreover, an additional step may be employed, and one or more of the steps may be omitted.

The following configurations also belong to the technical scope of the present invention.
Item (1) An inhaler device that uses a substrate to generate an aerosol to be inhaled by a user includes:
   a first communicator that performs wireless communication; and
   a controller that controls the first communicator.

   The controller switches control of the first communicator when an accessory to be detachably attached to the inhaler device is detected as being attached to the inhaler device.
Item (2) In the inhaler device according to item (1),
   the accessory includes a second communicator that performs wireless communication.
Item (3) In the inhaler device according to item (2),
   the controller controls the first communicator such that the first communicator transmits information different from information transmitted by the second communicator.
Item (4) In the inhaler device according to item (2) or (3),
   the controller controls the first communicator such that the first communicator communicates with a communication counterpart different from a communication counterpart of the second communicator.
Item (5) In the inhaler device according to any one of items (2) to (4),
   the controller controls the second communicator.
Item (6) In the inhaler device according to item (5),
   the controller controls the second communicator such that the second communicator transmits information different from information transmitted by the first communicator.
Item (7) In the inhaler device according to item (5) or (6),
   the controller controls the second communicator such that the second communicator communicates with a communication counterpart different from a communication counterpart of the first communicator.
Item (8) In the inhaler device according to any one of items (2) to (7),
   information to be transmitted by the first communicator or the second communicator includes identification information about the substrate.
Item (9) In the inhaler device according to any one of items (2) to (8),
   information to be transmitted by the first communicator or the second communicator at least includes either identification information about the inhaler device or identification information about the user using the inhaler device.
Item (10) In the inhaler device according to any one of items (2) to (9),
   information to be transmitted by the first communicator or the second communicator includes profile information indicating a profile that defines operation involving the inhaler device heating the substrate for generating the aerosol.
Item (11) In the inhaler device according to any one of items (2) to (10),
   the wireless communication by the first communicator and the wireless communication by the second communicator are short-range wireless communication.
Item (12) In the inhaler device according to item (11),
   a communication method used by the first communicator and a communication method used by the second communicator are different from each other.
Item (13) In the inhaler device according to item (11) or (12),
   the first communicator uses Bluetooth as a communication method, and the second communicator uses NFC as a communication method.
Item (14) In the inhaler device according to item (1),
   the inhaler device further includes a third communicator that performs wireless communication, and
   the controller performs switching for each communication counterpart and/or each item of information to be transmitted to use either the first communicator or the third communicator for transmission.
Item (15) In the inhaler device according to item (14),
   the controller permits communication by the first communicator and the third communicator in a case where the accessory is attached.
Item (16) In the inhaler device according to any one of items (1) to (15),
   the controller permits generation of the aerosol in a case where the accessory is attached.
Item (17) A control method executed by an inhaler device that uses a substrate to generate an aerosol to be inhaled by a user includes:
   switching control of wireless communication performed by the inhaler device when an accessory to be detachably attached to the inhaler device is detected as being attached to the inhaler device.
Item (18) A program causes a computer to execute a process. The computer controls an inhaler device that uses a substrate to generate an aerosol to be inhaled by a user. The process includes:
   switching control of wireless communication performed by the inhaler device when an accessory to be detachably attached to the inhaler device is detected as being attached to the inhaler device.

### Reference Signs List

- 1: distribution system
- 100: inhaler device
- 110: power supply unit
- 111: power supply
- 112: sensor
- 113: notifier
- 114: memory
- 115: communicator, main communicator
- 116: controller
- 120: cartridge
- 121: heater
- 122: liquid guide
- 123: liquid storage
- 124: mouthpiece
- 130: flavor imparting cartridge
- 131: flavor source
- 140: holder
- 141: internal space
- 142: opening
- 143: bottom
- 144: heat insulator
- 150: stick substrate
- 151: substrate
- 152: inhalation port
- 160: front panel
- 161: communicator, front-panel communicator
- 162: back panel
- 180: airflow path
- 181: air inlet hole
- 182: air outlet hole
- 200: user terminal
- 300: sales terminal
- 400: server

## Claims

1. An inhaler device that uses a substrate to generate an aerosol to be inhaled by a user, the inhaler device comprising:
a first communicator that performs wireless communication; and
a controller that controls the first communicator,
wherein the controller switches control of the first communicator when an accessory to be detachably attached to the inhaler device is detected as being attached to the inhaler device.

2. The inhaler device according to claim 1,
wherein the accessory includes a second communicator that performs wireless communication.

3. The inhaler device according to claim 2,
wherein the controller controls the first communicator such that the first communicator transmits information different from information transmitted by the second communicator.

4. The inhaler device according to claim 2 or 3,
wherein the controller controls the first communicator such that the first communicator communicates with a communication counterpart different from a communication counterpart of the second communicator.

5. The inhaler device according to any one of claims 2 to 4,
wherein the controller controls the second communicator.

6. The inhaler device according to claim 5,
wherein the controller controls the second communicator such that the second communicator transmits information different from information transmitted by the first communicator.

7. The inhaler device according to claim 5 or 6,
wherein the controller controls the second communicator such that the second communicator communicates with a communication counterpart different from a communication counterpart of the first communicator.

8. The inhaler device according to any one of claims 2 to 7,
wherein information to be transmitted by the first communicator or the second communicator includes identification information about the substrate.

9. The inhaler device according to any one of claims 2 to 8,
wherein information to be transmitted by the first communicator or the second communicator at least includes either identification information about the inhaler device or identification information about the user using the inhaler device.

10. The inhaler device according to any one of claims 2 to 9,
wherein information to be transmitted by the first communicator or the second communicator includes profile information indicating a profile that defines operation involving the inhaler device heating the substrate for generating the aerosol.

11. The inhaler device according to any one of claims 2 to 10,
wherein the wireless communication by the first communicator and the wireless communication by the second communicator are short-range wireless communication.

12. The inhaler device according to claim 11,
wherein a communication method used by the first communicator and a communication method used by the second communicator are different from each other.

13. The inhaler device according to claim 11 or 12,
wherein the first communicator uses Bluetooth as a communication method, and the second communicator uses NFC as a communication method.

14. The inhaler device according to claim 1,
wherein the inhaler device further comprises a third communicator that performs wireless communication, and wherein the controller performs switching for each communication counterpart and/or each item of information to be transmitted to use either the first communicator or the third communicator for transmission.

15. The inhaler device according to claim 14,
wherein the controller permits communication by the first communicator and the third communicator in a case where the accessory is attached.

16. The inhaler device according to any one of claims 1 to 15,
wherein the controller permits generation of the aerosol in a case where the accessory is attached.

17. A control method executed by an inhaler device that uses a substrate to generate an aerosol to be inhaled by a user, the control method comprising:
switching control of wireless communication performed by the inhaler device when an accessory to be detachably attached to the inhaler device is detected as being attached to the inhaler device.

18. A program causing a computer to execute a process, the computer controlling an inhaler device that uses a substrate to generate an aerosol to be inhaled by a user, the process comprising:
switching control of wireless communication performed by the inhaler device when an accessory to be detachably attached to the inhaler device is detected as being attached to the inhaler device.
